# EUROPEAN PATENT APPLICATION

(11) **EP 0 879 822 A2**
(43) Date of publication of application: **25.11.1998**
(21) Application number: 98303629.4
(22) Date of filing: 08.05.1998
(51) Int. Cl.: C07F 7/12

(54) **Method for preparation of alkenylsilanes**

(30) Priority: 19.05.1997 US 861311
(71) Applicant: DOW CORNING CORPORATION, Midland Michigan 48686-0994 (US)
(72) Inventor: Davern, Sean Patrick, Auburn, Michigan 48611 (US); Nguyen, Binh Thanh, Midland, Michigan 48640 (US)
(74) Representative: Kyle, Diana

(57) **Abstract**

A method for preparation of alkenylsilanes comprising contacting magnesium metal with a mixture comprising diethylene glycol dibutyl ether, an alkenyl halide and a halosilane at a temperature within a range of 5 to 200°C. The method provides a high yield of alkenylsilane that is easily recoverable and that also achieves high ratios of alkenylsilane product to diethylene glycol dibutyl ether utilized.

## Description

The present invention is a method for preparation of alkenylsilanes which comprises contacting magnesium metal with a mixture comprising diethylene glycol dibutyl ether, alkenyl halide and a halosilane at a temperature within a range of 5 to 200°C. The method provides a high yield of alkenylsilane that is easily recoverable and also achieves high ratios of alkenylsilane production relative to diethylene glycol dibutyl ether present therein.

The reaction of organic halides with magnesium metal in the presence of solvents such as dialkyl ethers to form reactive complexes typically referred to as Grignard reagents are well known. The production and reaction of Grignard reagents has been the subject of books and numerous review articles. Such reviews are provided, for example, in Coates et al., ORGANOMETALLIC COMPOUNDS, Vol. 1, p. 76-103 (1967), Methuen and Co. LTD, London, U.K.; and Kirk and Othmer, ENCYCLOPEDIA OF CHEMICAL TECHNOLOGY, Vol. 10, 721-734 (1966), The Interscience Encyclopedia, Inc., NY, NY. The Grignard reagent structure has not been determined with certainty; however, it is generally believed that the Grignard reagent exists as a complex in solution and that solvent plays a critical role in the complex formation. The unpredictable effect of solvent on formation and reactivity of Grignard reagents is also discussed in the above publications.

The reaction of Grignard reagents with halosilanes is also well known and numerous reactions are described in Kharash et al., Grignard Reactions of Nonmetallic Substances, Prentice-Hall, Inc. NY, 1954, P. 1306-1331.

The preparation of 1,5-hexadiene by a process using an allyl chloride Grignard reagent as an intermediate is known. For example, Turk et al., Organic Synthesis, Vol. 27, 7-8, 1947, teach a process for preparing 1,5-hexadiene by the reaction of allyl chloride in anhydrous ether-with magnesium turnings. Therein, it is reported that this reaction results in the formation of a thick slurry which becomes unstirrable. This unstirrable slurry is then treated with a hydrochloric acid solution until the magnesium chloride by-product is in solution and the slurry becomes sufficiently fluid to be stirred.

The process of Turk et al., is not generally acceptable as a commercial process. The formation of a non-stirrable slurry during reaction can cause reduced mass and heat transfer, resulting in reduced product. Furthermore, the nature of the slurry makes it necessary to treat said slurry in an additional step with a reagent to solubilize the slurry to allow isolation of the product. Typically, a major portion of the product is trapped within the non-stirrable slurry and is lost. Additionally, the non-flowable slurry does not allow the reaction to be run as a continuous process.

U.S. Patent No. 5,358,670 reports the formation of alkyl Grignard reagents in diethylene glycol dibutyl ether (DEGDBE). Reportedly, those Grignard reagents, prepared in the presence of DEGDBE, have improved yield and stability.

It is an objective of the present invention to provide a method for preparing alkenylsilanes using a Grignard reagent as an intermediate, where the method avoids many of the above discussed problems by creating a reaction mixture that is flowable and easily stirred. Thus, mass and heat transfer is enhanced in the reaction mixture and the yield of alkenylsilane is thus improved. In addition, our method provides for a two-phase system that allows one-step preparation of the alkenylsilane wherein the alkenylsilane is readily separated. Furthermore, this method reduces the amount of DEGDBE in the reaction and provides for an improved ratio of the desired alkenylsilane to by-product, when compared to known Grignard processes for preparing organo-substituted silanes. Unexpectedly, our claimed method provides a high yield of alkenylsilane and decreases the mole ratio of DEGDBE to alkenyl halide used in the reaction.

Our method for preparation of alkenylsilanes comprises contacting magnesium metal with a mixture comprising an alkenyl halide described by formula R¹X, and 0.01 to six moles of DEGDBE per mole of the alkenyl halide and 0.1 to 10 moles of a halosilane per mole of the alkenyl halide, where the halosilane is described by formula R²ₐH_{b}SiX_{4-a-b} and where R¹ is an alkenyl group comprising two to 20 carbon atoms, each R² is an independently selected monovalent hydrocarbon comprising one to 12 carbon atoms, X is a halogen selected from chlorine or bromine atom, a=0 to 3, b=0 to 3 and a+b=0 to 3, at a temperature within a range of 5 to 200°C.

In the present method, the term "one-step" means it is not necessary to isolate an intermediate Grignard reagent in our method and to then further react said Grignard reagent with the halosilane to form alkenylsilane. Moreover, it is not necessary to conduct a separate solubilization step on the resulting product mixture to facilitate recovery of the alkenylsilane. Compared to the prior art these features are surprising.

The method of preparing the magnesium metal and the physical form of the magnesium metal can be any of those known in the art. The magnesium metal can be, for example, in the form of powder, chips or turnings. The preferred form is metal turnings.

Contact of magnesium metal with the mixture comprising alkenyl halide and halosilane is effected in standard reactors suitable for running Grignard reactions. The reactor can be a batch-type, semi-batch type or continuous-type. A preferred reactor is a semi-batch reactor. In a preferred method, the reactor is purged and blanketed with an inert gas, such as nitrogen or argon and the reaction is run in an inert environment.

The mole ratio of magnesium metal to alkenyl halide fed to the reactor is not critical and is variable within wide limits. In a batch process, it is preferred that said ratio provide alkenyl halide in sufficient excess to ensure essentially total conversion of the magnesium metal to alkenyl magnesium halide complexes. When our method is conducted as a semi-batch process, the magnesium metal is typically present in excess compared to the alkenyl halide fed to the reactor. In such a case, the feed rate of alkenyl halide and halosilane to the reactor is controlled to assure acceptable conversion levels of alkenyl halide to alkenylsilane and to minimize the unreacted alkenyl magnesium halide complexes. The halosilane feed may also be split, with a portion being added after the magnesium bed to insure complete reaction of the alkenyl magnesium halide complex. It may also be desirable to split the solvent feed, with a portion being added after the magnesium bed to ensure complete reaction of the alkenyl magnesium halide complex. Excess alkenyl halide and halosilane added to the reactor can then be recovered and recycled to the process.

Alkenyl halides useful in our claimed method are described by formula R¹X, where R¹ is an alkenyl group comprising two to 20 carbon atoms and X is a halogen atom selected from bromine or chlorine. R¹ is, for example, alkenyl groups such as vinyl, allyl, pentenyl, hexenyl, heptenyl and octenyl; cycloalkenyl groups such as cyclobutenyl, cyclopentenyl, cyclohexenyl, cycloheptenyl and cyclooctenyl. Examples of useful alkenyl halides include vinylbromide, vinylchloride, allylbromide, allylchloride and chloroprene. Preferred is when R¹ is an allyl group. The preferred alkenyl halides are allylchloride and allylbromide. The most preferred alkenyl halide is allylchloride.

Halosilanes useful in the present method are described by formula R²ₐH_{b}SiX_{4-a-b}, where each R² is an independently selected monovalent hydrocarbon comprising one to 12 carbon atoms, X is a halogen atom selected from chlorine or bromine, a=0 to 3, b=0 to 3 and a+b=0 to 3. Preferred is when X is chlorine. R² is, for example, an alkyl such as methyl, ethyl, propyl, butyl, pentyl, hexyl, heptyl, octyl, nonyl, decyl, undecyl and dodecyl; a cycloalkyl such as cyclopropyl, cyclobutyl, cyclopentyl, cyclohexyl, cycloheptyl and cyclooctyl; an alkenyl such as vinyl or allyl; a cycloalkenyl such as cyclobutenyl, cyclopentenyl and cyclohexenyl; an aryl such as phenyl, tolyl and naphthyl; and an arylalkyl such as benzyl, betaphenylethyl and gamma-tolypropyl. Preferred is when R² is methyl. The preferred halosilane is selected from the group consisting of trichlorosilane, trimethylchlorosilane, dimethylchlorosilane, methyldichlorosilane, dimethyldichlorosilane, methyltrichlorosilane, tetrachlorosilane, dichlorosilane and the bromine analogs of such chlorosilanes.

The mole ratio of alkenyl halide to halosilane is varied within a range of 0.1 to 10. Preferred is when said ratio is between 0.8 to 3. A preferred method is when the magnesium metal is added to our process in excess to the alkenyl halide and the halosilane is also added in excess to the resulting alkenyl magnesium halide intermediate. However, for safety reasons and with some halosilanes, it may be desirable to run our method where the alkenyl magnesium halide intermediate is in excess.

The present method is conducted in the presence of DEGDBE as a solvent. Usually, 0.01 to six moles of DEGDBE are added per mole of alkenyl halide. Preferred is when 0.1 to one mole of DEGDBE is added per mole of alkenyl halide. Even more preferred is 0.1 to 0.6 mole of DEGDBE per mole of alkenyl halide.

The present method is run at a temperature within a range of 5 to 200°C. It is preferred that this temperature be within a range of 30 to 170°C. Most preferred is a temperature of 80 to 100°C. The pressure at which the present method is run is not critical and can range from atmospheric to 1480 kPa. However, the pressure must be at or above the vapor pressure of our reaction mixture. A preferred pressure is from atmospheric to 963 kPa.

The product of our method is an alkenylsilane, where one or more of the halogen substituents on the silicon atom of the halosilane have been replaced by an alkenyl group. Examples of alkenylsilanes which are prepared by the present method include, vinylchlorosilane, allylchlorosilane, butenylchlorosilane, pentenylchlorosilane, hexenylchlorosilane, cyclopentenylchlorosilane, allyltrichlorosilane, allylchlorosilane diallyldichlorosilane, diallylsilane, tetraallylsilane, allyltrimethylsilane, allyldimethylsilane, allylmethylchlorosilane, allyldimethylchlorosilane, allylmethlydichlorosilane and diallyldimethylsilane.

The mixture resulting from conduct of the present method separates on standing into two-phases, with one phase comprising alkenylsilane in DEGDBE and the other phase comprising a magnesium dihalide complex solubilized in DEGDBE. The alkenylsilane is then separated from the DEGDBE by, for example, distillation. The DEGDBE may be subsequently recovered from one or both phases and thereafter recycled to our method.

### Example 1

The reaction of magnesium metal, allyl chloride and trimethylchlorosilane in diethylene glycol dibutyl ether (DEGDBE) was evaluated. Magnesium turnings (0.24 mole), DEGDBE (0.55 mole), trimethylchlorosilane (0.17 mole) and octane (0.023 mole) as an internal standard were loaded into a glass flask equipped with a reflux condenser, addition funnel, mechanical stirrer, heating mantle and nitrogen inlet port. The flask was purged with nitrogen and then heated to 69°C. Allylchloride (0.19 mole) was slowly added to the mixture comprising DEGDBE (0.55 mole) and trimethylchlorosilane (0.17 mole) using the addition funnel over a 1.5 hour period. The temperature of the mixture reached 120°C. This reaction mixture was stirred an additional four hours, cooled to room temperature and then transferred to a separatory funnel and allowed to separate into two phases. The reaction mixture top phase was analyzed by gas chromatography using a flame ionization detector (GC-FID). The GC-FID analysis indicated a 62 percent yield of allyltrimethylsilane, based upon the amount of trimethylchlorosilane fed to the process and approximately a 10:1 mole ratio of allyltrimethylsilane to 1,5-hexadiene by-product.

### Example 2

The reaction of magnesium metal, allyl chloride and trimethylchlorosilane in DEGDBE was evaluated. Magnesium turnings (2.10 mole), DEGDBE (0.71 mole) and trimethylchlorosilane (1.96 mole) were loaded into a glass flask equipped with a reflux condenser, addition funnel, mechanical stirrer, heating mantle and nitrogen inlet port. The flask was purged with nitrogen and then heated to 60°C. A mixture of allyl chloride (0.19 mole) and DEGDBE (2.41 mole) were slowly added to the mixture comprising the DEGDBE and trimethylchlorosilane using the addition funnel over a 1.5 hour period. The mixture was stirred for five hours at a temperature of 70 to 85°C. and cooled for 16 hours to room temperature. The mixture was then transferred to a separatory funnel to separate into two phases. The top phase containing the allyltrimethylsilane was analyzed by gas chromatography using GC-FID and it indicated a 82 percent yield of allyltrimethylsilane, based upon the amount of trimethylchlorosilane fed to the process and a 20:1 mole ratio of allyltrimethylsilane to 1,5-hexadiene by-product.

## Claims

1. A method for the preparation of an alkenylsilane, which comprises contacting magnesium metal with a mixture comprising an alkenyl halide of formula R¹X, 0.01 to six moles of diethylene glycol dibutyl ether per mole of alkenyl halide and 0.1 to 10 moles of a halosilane per mole of alkenyl halide, where the halosilane has the formula R²ₐH_{b}SiX_{4-a-b,}
where R¹ is an alkenyl group comprising two to 20 carbon atoms and each R² is an independently selected monovalent hydrocarbon comprising one to 12 carbon atoms, X is a halogen atom selected from chlorine or bromine, a=0 to 3, b=0 to 3 and a+b=0 to 3,
at a temperature within a range of 5 to 200°C.

2. A method according to claim 1, wherein the contacting is performed in an inert environment.

3. A method according to claim 1 or 2, wherein the magnesium is in the form of metal turnings.

4. A method according to any of claims 1 to 3, wherein R¹ is an alkyl group.

5. A method according to claim 4, wherein the alkenyl halide is allylchloride or allylbromide.

6. A method according to any of claims 1 to 5, wherein the halosilane is selected from trichlorosilane, trimethylchlorosilane, dimethylchlorosilane, methyltrichlorosilane, tetrachlorosilane, dichlorosilane and the bromine analogs of these chlorosilanes.

7. A method according to any of claims 1 to 6, wherein R² is methyl.

8. A method according to any of claims 1 to 7, wherein the molar ratio of alkenyl halide to halosilane is between 0.8 to 3.

9. A method according to any of claims 1 to 8 performed at a temperature of from 30 to 170°C.

10. A method according to claim 9 performed at a temperature of 80 to 100°C.
